# FASCICULE DE BREVET EUROPEEN

(11) **EP 1 404 087 B1**
(45) Date de publication et mention de la délivrance du brevet: **31.10.2012**
(21) Numéro de dépôt: 03292360.9
(22) Date de dépôt: 26.09.2003
(51) Int. Cl.: H04L 29/06, H04L 12/40, H04L 12/42, H04L 12/56

(54) **Dispositif ordonnanceur pour un système à ressources partagées asymétriquement**
Ablauffolgesteuerungsvorrichtung für ein System mit asymmetrischen gemeinsamen Betriebsmitteln
Scheduling device for a system with asymmetrically shared resources

(30) Priorité: 26.09.2002 FR 0211899
(43) Date de publication de la demande: 31.03.2004
(73) Titulaire: Alcatel Lucent, 75007 Paris (FR)
(72) Inventeur: Dotaro, Emmanuel, 91370 Verriéres Le Buisson (FR); Ciavaglia, Laurent, 77300 Fontainebleau (FR); Golla, Prasad, Plano Texas 75075 (US)
(74) Mandataire: Sciaux, Edmond

(56) Documents cités:
- US-A- 5 870 396
- GIROUX N ET AL: "Queuing and Scheduling, SCHEDULING MECHANISMS", QUALITY OF SERVICE IN ATM NETWORKS: STATE-OF-THE-ART TRAFFIC MANAGEMENT, XX, XX, 1999, pages 96-109, XP002245024,

## Description

La présente invention concerne un ordonnanceur, encore appelé discipline de service, pour un système comportant une pluralité de noeuds partageant une pluralité de ressources telles que des longueurs d'onde.

Un tel système est par exemple un réseau en anneau de paquets optiques du type DBORN (Dual Bus Optical Ring Network). L'architecture de l'anneau est organisée autour d'un concentrateur et est constituée d'une pluralité de noeuds tels que des multiplexeurs d'insertion/extraction de paquets optiques du type OPADM (Optical Packet Add/Drop Multiplexer), chaque noeud étant en communication avec le concentrateur. Ce réseau contient un bus d'écriture correspondant à une pluralité de longueurs d'onde dites montantes et un bus de lecture correspondant à une pluralité de longueurs d'onde descendantes. Les longeurs d'onde montantes et descendantes qui sont le plus souvent multiplexées sur une même fibre, sont utilisées et donc partagées par les noeuds du réseau pour émettre et recevoir des paquets vers et depuis le concentrateur. Une pluralité de noeuds partage donc une même ressource telle qu'une longueur d'onde pour recevoir des paquets envoyés par le concentrateur assimilable à un noeud source.

Cependant, pour tenir compte des spécificités de chacun de noeuds, tous les noeuds ne partagent pas nécessairement une même ressource. Ainsi, il se peut qu'une ressource soit partagée par une partie seulement des noeuds du réseau.

Chacun des noeuds ne partageant pas les mêmes ressources que les autres noeuds dans les mêmes proportions, on parle alors de ressources partagées asymétriquement.

Une des fonctions des réseaux concerne la discipline de service c'est à dire le fait de déterminer, parmi une pluralité de files d'attente ou buffers, quel est le paquet associé à une file d'attente particulière qui doit être envoyé sur un noeud. Cette détermination est réalisée par un dispositif appelé ordonnanceur.

Un tel dispositif est utilisé dans le commutateur décrit dans le document US 5,870,396.

La présente invention a pour objet un dispositif ordonnanceur, dit encore discipline de service, pour un système comportant une pluralité de noeuds partageant asymétriquement une pluralité de ressources telles que des longueurs d'onde.

La présente invention propose à cet effet un dispositif ordonnanceur pour ordonnancer la transmission de données à partir d'une pluralité de files d'attente d'un noeud source vers une pluralité de noeuds de destination via une pluralité de ports de sortie dudit noeud source, chacun desdits ports de sortie étant associés à une ressource, les données étant transmises via ladite ressource vers un noeud de destination, chacun desdits noeuds recevant des données de tout ou partie de ladite pluralité de ressources, ledit dispositif ordonnanceur étant **caractérisé en ce qu'il** comporte une pluralité de serveurs, chacun desdits serveurs étant associé respectivement à une ressource de ladite pluralité de ressources et chacun desdits serveurs comportant des moyens d'ordonnancement, lesdits moyens d'ordonnancement étant indépendants pour chacun desdits serveurs.

Grâce à l'invention, chaque serveur fonctionne indépendamment des autres serveurs et peut prendre en compte les spécificités de la ressource à laquelle il est associé et notamment le fait qu'une ressource ne soit pas partagée de façon uniforme par tous les noeuds de destination, chaque noeud utilisant ladite ressource suivant un certain coefficient de pondération. Ce coefficient de pondération peut être nul si le noeud n'utilise pas ladite ressource. Il peut également être lui-même pondéré selon l'importance que prend ladite ressource pour le noeud de destination. Ainsi une ressource utilisée par un premier noeud et un deuxième noeud ne sera pas partagé de la même façon entre le premier noeud et le deuxième noeud si le premier noeud utilise davantage d'autres ressources que le deuxième noeud. Chaque serveur peut par exemple prendre en considération une double pondération : une première pondération donnant une information sur l'utilisation de la ressource par le noeud et traduisant l'asymétrie du système et une deuxième pondération donnant une information sur le ratio d'utilisation de la ressource par le noeud en fonction du trafic à destination dudit noeud par rapport au trafic total.

Selon un mode de réalisation, lesdits moyens d'ordonnancement comportent une pluralité d'étages correspondant respectivement à une pluralité d'ordonnancements selon des critères distincts.

Selon un mode de réalisation, lesdits moyens d'ordonnancement comportent des moyens d'ordonnancement cyclique du type Round Robin.

Les moyens d'ordonnancement Round Robin parcourent séquentiellement et cycliquement des files d'attente de type FIFO (First In First Out) et servent la première file prête ou non vide. Si la file d'attente est vide, les moyens d'ordonnancement passent à la suivante. Certaines files peuvent être privilégiées en définissant un poids correspondant par exemple au nombre d'éléments ou paquets que peut prendre l'ordonnanceur en tête de la file d'attente ; on parle alors de Weighted Round Robin WRR.

Selon un autre mode de réalisation, lesdits moyens d'ordonnancement comportent des moyens d'ordonnancement WFR (Weighted Fair Queueing).

Cet algorithme donne un traitement prioritaire aux flux de faible volume et permet aux flux de volume important d'utiliser la place qui reste. Pour cela, il trie et regroupe les paquets par flux, puis met ceux-ci en file d'attente suivant le volume de trafic dans chaque flux.

Avantageusement, lesdits moyens d'ordonnancement sont dépendants d'un ensemble de pondérations statiques et/ou dynamiques.

Les pondérations statiques peuvent par exemple être issues de procédés classiques de partition ou d'allocation des ressources. Les pondérations dynamiques peuvent être calculées sur la base d'informations de contrôle de congestion. Une combinaison de ces deux types de pondérations peut également être envisagée.

Selon un mode de réalisation particulièrement avantageux, lesdits moyens d'ordonnancement sont dépendants d'un premier ensemble de pondérations, chacune desdites pondérations traduisant le pourcentage d'allocation de ladite ressource à chacun desdits noeuds de ladite pluralité de noeuds.

Ce type de pondération est obtenu par des procédés classiques de partition ou d'allocation des ressources.

De manière avantageuse, lesdits moyens d'ordonnancement sont dépendants d'un deuxième ensemble de pondérations, chacune desdites pondérations traduisant le poids relatif du trafic de chacun desdits noeuds par rapport au trafic total.

La présente invention a également pour objet un noeud comportant un dispositif ordonnanceur selon l'invention et incluant une pluralité de files d'attente pour l'émission de données vers une pluralité de noeuds de destination et une pluralité de ports de sortie.

La présente invention a en outre pour objet un système de transmission de données comportant au moins un noeud source selon l'invention, ledit système comportant :
- une pluralité de noeuds de destination,
- une pluralité de ressources.

D'autres caractéristiques et avantages de la présente invention apparaîtront dans la description suivante d'un mode de réalisation de l'invention, donné à titre illustratif et nullement limitatif.
- La figure 1 représente schématiquement un système de transmission incorporant un premier exemple de réalisation du dispositif ordonnanceur selon l'invention.
- La figure 2 représente schématiquement un système de transmission incorporant un second exemple de réalisation du dispositif ordonnanceur selon l'invention.
- La figure 3 illustre un arbitrage à trois niveaux.

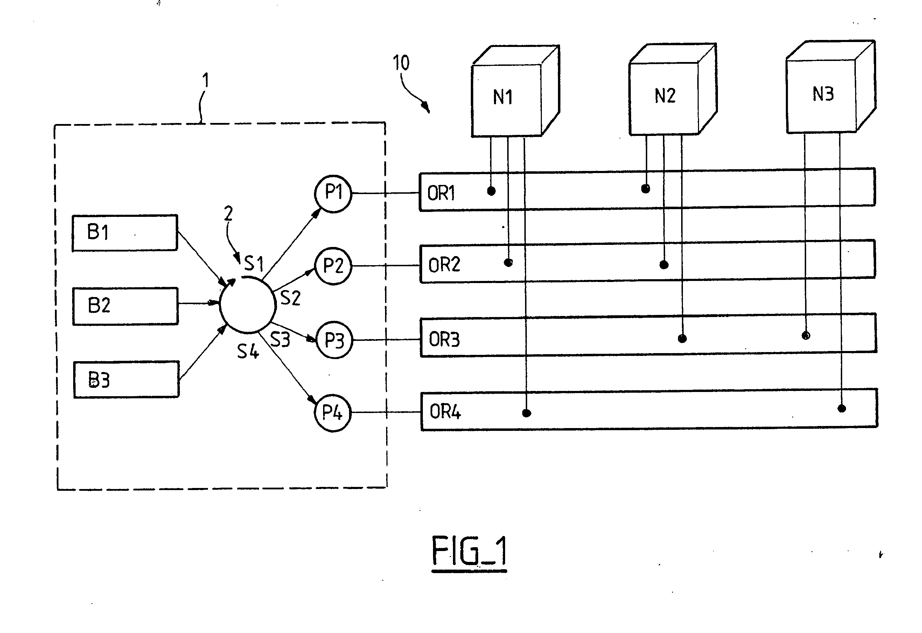

La **figure 1** représente schématiquement un système de transmission 10 tel qu'un réseau en anneau de paquets optiques. Cette représentation est limitée à la description de l'invention, ledit système pouvant comporter de nombreux autres éléments. Le système 10 comporte :
- un noeud source 1,
- trois noeuds de destination N₁, N₂ et N₃,
- quatre ressources OR₁, OR₂, OR₃ et OR₄.

Les ressources OR₁, OR₂, OR₃ et OR₄ sont par exemple des longueurs d'onde multiplexées sur une fibre optique selon une technologie DWDM (Dense Wavelength Division Multiplex).

Les noeuds N₁, N₂ et N₃ sont par exemple des multiplexeurs OPADM (Optical Packet Add/Drop Multiplexer).

Le noeud source 1 est par exemple concentrateur électronique tel qu'un commutateur Ethernet.

Le noeud source 1 comprend :
- trois files d'attentes ou buffers B₁, B₂ et B₃ permettant de stocker des paquets avant de les émettre respectivement vers les noeuds N₁, N₂ et N₃,
- un dispositif ordonnanceur 2 encore appelé discipline de service,
- quatre ports de sortie P₁, P₂, P₃ et P₄.permettant d'émettre les paquets de données respectivement sur les ressources OR₁, OR₂, OR₃ et OR₄.

Le dispositif ordonnanceur 2 comprend quatre serveurs S₁, S₂, S₃ et S₄ associés chacun respectivement aux ressources OR₁, OR₂, OR₃ et OR₄ et aux ports P₁, P₂, P₃ et P₄.

Chacun des quatre serveurs S₁, S₂, S₃ et S₄ détermine quel est le paquet associé à une file d'attente particulière qui doit être envoyé sur un noeud via la ressource associée au serveur.

Les ressources OR₁ et OR₂ sont partagées par les noeuds N, et N₂.

La ressource OR₃ est partagée par les noeuds N₂ et N₃.

La ressource OR₄ est partagée par les noeuds N, et N₃.

Les ressources ne sont donc pas partagées uniformément par les noeuds N₁, N₂ et N₃.

Ainsi, une même ressource utilisée par un premier noeud et un deuxième noeud ne peut pas être utilisée de la même façon par le premier noeud utilisant davantage d'autres ressources que le deuxième noeud.

Par exemple, le noeud N₁ utilise les ressources OR₁, OR₂ et OR₄ tandis que le noeud N₃ utilise uniquement les ressources OR₃ et OR₄. Le noeud N, peut donc utiliser trois ressources pendant que le noeud N₃ ne peut en utiliser que deux.

Le procédé d'allocation de ressources prend donc en compte cette allocation non uniformément répartie et attribue une pondération à chacun des noeuds correspondant au pourcentage d'allocation de ladite ressource à chacun desdits noeuds de ladite pluralité de noeuds. Cette pondération est notée, de façon générale, Rᵢⱼ et correspond au ratio alloué au noeud Nᵢ sur la ressource ORᵢ.

De plus, les noeuds de destination peuvent avoir des poids différents à cause de leurs trafics. Ainsi, en appelant Tᵢ le trafic à destination du noeud Nᵢ, chaque noeud peut être pondéré par un coefficient Wᵢ égal à ( Tᵢ / ∑i Tᵢ) où ∑i Tᵢ désigne la somme des trafics à destination de l'ensemble des noeuds.

Ainsi, chacun des serveurs se voit attribuer une série de pondérations, dites méta-pondérations, pour chacun des noeuds en prenant en considération à la fois l'asymétrie du partage des ressources et le trafic différent pour chacun des noeuds.

Ces méta-pondérations sont résumées dans le tableau 1 ci-dessous et correspond au produit de Rᵢⱼ par Wᵢ.

**Tableau 1**

| Serveurs / Noeuds | N1 | N2 | N3 |
|---|---|---|---|
| s1 | W1 × R11 | W2 × R21 | W3 × R31 |
| s2 | W1 × R12 | W2 × R22 | W3 × R32 |
| s3 | W1 × R13 | W2 × R23 | W3 × R33 |
| s4 | W1 × R14 | W2 × R24 | W3 × R34 |

Chacun desdits serveurs utilise ces méta-pondérations et procède, de façon indépendante des autres serveurs, à un mécanisme d'ordonnancement du type Round Robin, WRR (Weighted Round Robin) ou WFR (Weighted Fair Queueing) afin de sélectionner la file d'attente et le ou les paquets à émettre. Les serveurs peuvent inclure des moyens logiciels, matériels ou une combinaison des deux.

Les pondérations telles qu'elles ont été décrites plus haut peuvent être mises à jour statiquement ou dynamiquement. Une mise à jour dynamique permet une adaptation dynamique de l'ordonnancement en prenant en compte la variation de charge en fonction du temps et de la destination.

De plus, l'invention permet de préserver l'ordre des paquets en éliminant le besoin de mécanismes ou procédures complexes et coûteuses pour palier à un déséquencement et pour réorganiser les paquets. Pour assurer la préservation de l'ordre des paquets, il suffit que le service des paquets respecte l'ordre établi grâce à un accès parallèle paquet par paquet par les serveurs (et non par bloc).

L'invention a été décrite en relation avec un ensemble de pondérations traduisant le poids relatif du trafic de chacun des noeuds par rapport au trafic total mais d'autres ensembles de pondérations peuvent être utilisés traduisant d'autres paramètres ou caractéristiques de chacun des noeuds, tels que les types de service et/ou d'utilisateur. Les pondérations peuvent être appliquées sous la forme de méta-pondérations, comme cela est décrit ci-dessus, mais peuvent être appliquées aussi bien sous la forme de paramètres séparés à différents niveaux..

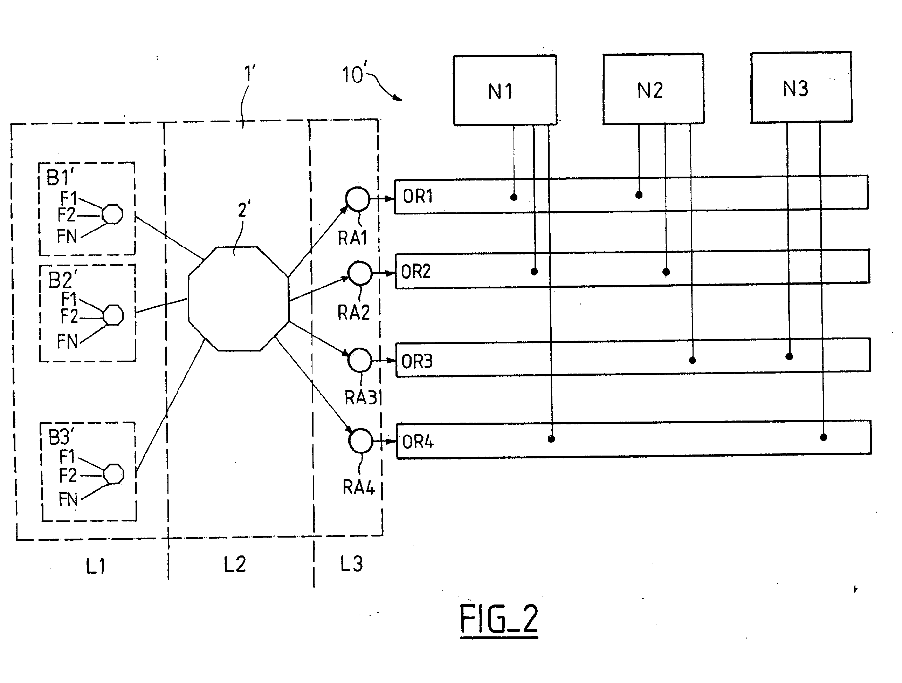

La **figure 2** représente schématiquement un système de transmission incorporant un second exemple de réalisation du dispositif ordonnanceur selon l'invention, comportant une pluralité d'étages L1, L2, L3 correspondant respectivement à une pluralité d'ordonnancements selon des critères distincts. Le réseau 10' est analogue au réseau 10 décrit précédemment. Il diffère par le dispositif d'ordonnancement dans le noeud source 1', et il comprend :
- trois files d'attentes ou buffers B'₁, B'₂ et B'₃ permettant de stocker des paquets avant de les émettre respectivement vers les noeuds N₁, N₂ et N₃, chacune de ces files étant munie d'un ordonnanceur dit de niveau flux : respectivement FLA1, FLA2, FLA3, pour arbitrer entre les flux F1, ..., FN destinés à une même sortie du noeud 1';
- un dispositif ordonnanceur dit de niveau noeud, 2', qui arbitre entre les charges correspondant respectivement aux différentes destinations, en fonction des capacités des bus;
- quatre dispositifs ordonnanceurs dit de niveau ressource, RA1, RA2, RA3 et RA4.permettant de tenir compte de la façon dont les noeuds N1, ..., N4 sont connectés sur les ressources OR₁, OR₂, OR₃ et OR₄.

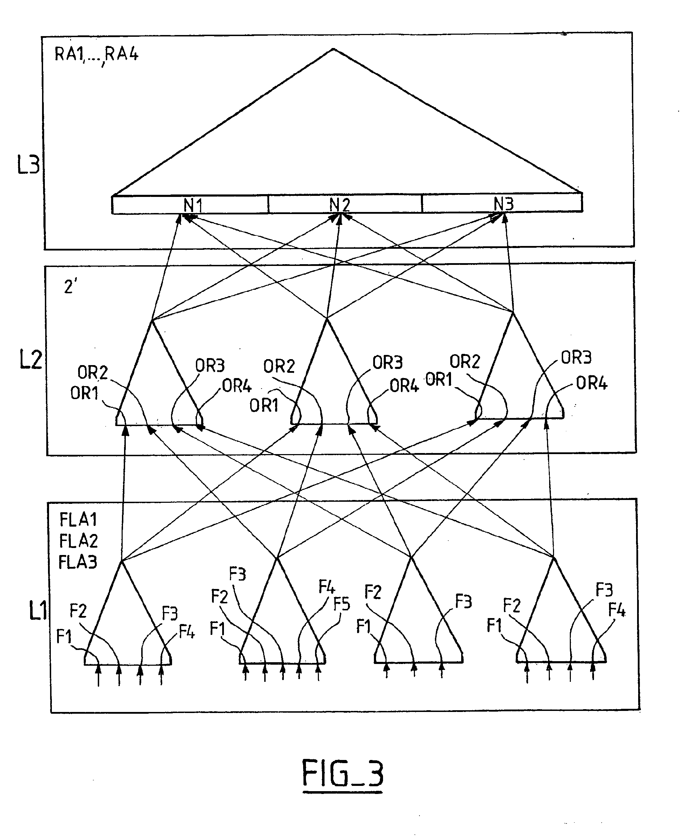

**La** **figure 3** illustre cet arbitrage à trois niveaux mis en oeuvre dans le dispositif ordonannceur du noeud 1' qui est représenté sur la figure 2.

Bien entendu, l'invention n'est pas limitée aux modes de réalisation qui viennent d'être décrits. En particulier, le nombre de niveaux hiérarchiques peut être supérieure à trois.

Notamment l'invention a été décrite dans le cadre d'un réseau de paquets optiques mais peut être généralisée à tout type de système utilisant des ressources partagées de façon asymétrique tel qu'un système informatique comportant une pluralité d'unités de mémoire (files d'attente) connectées à une pluralité de processeurs (serveurs) via une pluralité de ressources (circuits électroniques) organisées en bus de lecture et d'écriture, le noeud source désignant un composant élémentaire comportant cette pluralité d'unités de mémoire.

De même, les mécanismes d'ordonnancement peuvent être différents de ceux décrits.

## Revendications

1. Dispositif ordonnanceur (2) pour ordonnancer la transmission de données à partir d'une pluralité de files d'attente (B₁, B₂, B₃) d'un noeud source (1) vers une pluralité de noeuds de destination (N₁, N₂, N₃) via une pluralité de ports de sortie (P₁, P₂, P₃, P₄) dudit noeud source (1), chacun desdits ports de sortie (P₁, P₂, P₃, P₄) étant associés à une ressource (OR₁, OR₂, OR₃, OR₄), les données étant transmises via ladite ressource vers un noeud de destination (N₁, N₂, N₃), chacun desdits noeuds recevant des données de tout ou partie de ladite pluralité de ressources (OR₁, OR₂, OR₃, OR₄), ledit dispositif ordonnanceur (2) étant **caractérisé en ce qu'**il comporte une pluralité de serveurs (S₁, S₂, S₃, S₄), chacun desdits serveurs étant associé respectivement à une ressource de ladite pluralité de ressources (OR₁, OR₂, OR₃, OR₄) et chacun desdits serveurs comportant des moyens d'ordonnancement, lesdits moyens d'ordonnancement étant indépendants pour chacun desdits serveurs.

2. Dispositif ordonnanceur (2) selon la revendication 1 **caractérisé en ce que** lesdits moyens d'ordonnancement comportent une pluralité d'étages (L1, L2, L3) correspondant respectivement à une pluralité d'ordonnancements selon des critères distincts.

3. Dispositif ordonnanceur (2) selon la revendication 1 **caractérisé en ce que** lesdits moyens d'ordonnancement comportent des moyens d'ordonnancement cyclique du type Round Robin.

4. Dispositif ordonnanceur (2) selon la revendication 1 **caractérisé en ce que** lesdits moyens d'ordonnancement comportent des moyens d'ordonnancement WFQ.

5. Dispositif ordonnanceur (2) selon la revendication 1, **caractérisé en ce que** lesdits moyens d'ordonnancement sont dépendants d'un ensemble de pondérations statiques et/ou dynamiques.

6. Dispositif ordonnanceur (2) selon la revendication 1, **caractérisé en ce**
**que** lesdits moyens d'ordonnancement sont dépendants d'un premier ensemble de pondérations, chacune desdites pondérations traduisant le pourcentage d'allocation de ladite ressource à chacun desdits noeuds de ladite pluralité de noeuds.

7. Dispositif ordonnanceur (2) selon la revendication 5, **caractérisé en ce que** lesdits moyens d'ordonnancement sont dépendants d'un deuxième ensemble de pondérations, chacune desdites pondérations traduisant le poids relatif du trafic de chacun desdits noeuds par rapport au trafic total de la pluralité desdits noeuds.

8. Noeud (1) incluant un dispositif ordonnanceur (2) selon la revendication 1, comportant une pluralité de files d'attente (B₁, B₂, B₃) pour l'émission de données vers une pluralité de noeuds de destination (N₁, N₂, N₃), et une pluralité de ports de sortie (P₁, P₂, P₃, P₄).

9. Système (10) de transmission de données comportant au moins un noeud source (1) selon l'une des revendications précédentes.

## Claims

1. A sequencing device (2) for sequencing the transmission of data from a plurality of queues (B₁, B₂, B₃) of a source node (1) to a plurality of destination nodes (N₁, N₂ N₃) via a plurality of output ports (P₁, P₂, P₃, P₄) of said source node (1), each of said output ports (P₁, P₂, P₃, P₄) being associated with a resource (OR₁, OR₂, OR₃, OR₄), the data being transmitted via said resource to a destination node (N₁, N₂, N₃), each of said nodes receiving data from all or some of said plurality of resources (OR₁, OR₂, OR₃, OR₄), said sequencing device (2) being **characterized in that** it comprises a plurality of servers (S₁, S₂, S₃, S₄), each of said servers being respectively associated with a resource of said plurality of resources (OR₁, OR₂, OR₃, OR₄) and each of said servers comprising sequencing means, said sequencing means being independent for each of said servers.

2. A sequencing device (2) according to claim 1, **characterized in that** said sequencing means comprise a plurality **in that** said sequencing means comprise a plurality of stages (L₁, L₂, L₃) respectively corresponding to a plurality of sequences in accordance with distinct criteria.

3. A sequencing device (2) according to claim 1, **characterized in that** said sequencing means comprise round-robin cyclical sequencing means.

4. A sequencing device (2) according to claim 1, **characterized in that** said sequencing means comprise sequencing means.

5. A sequencing device (2) according to claim 1, **characterized in that** said sequencing means are dependent on a set of static and/or dynamic weights.

6. A sequencing device (2) according to claim 1, **characterized in that** said sequencing means are dependent on a set of static and/or dynamic weights, each of said weights signifying the percentage of said resource allocated to each of said nodes of said plurality of nodes.

7. A sequencing device (2) according to claim 5, **characterized in that** said sequencing means are dependent on a second set of weights, each of said weights signifying the relative weight of each of said nodes' traffic relative to the total traffic of the plurality of said nodes.

8. A node including a sequencing device according to claim 1, comprising a plurality of queues (B₁, B₂, B₃) for transmitting data to a plurality of destination nodes (N1, N2, N3), and a plurality of output ports (P₁, P₂, P₃, P₄).

9. A data transmission system (10) comprising at least one source node (1) according to one of the preceding claims.

## Patentansprüche

1. Ablauffolgesteuerungsvorrichtung (2) zur Steuerung der Ablauffolge der Übertragung von Daten aus einer Vielzahl von Warteschlangen (B₁, B₂, B₃) eines Quellknotens (1) an eine Vielzahl von Zielknoten (N₁, N₂ N₃) über eine Vielzahl von Ausgangsports (P₁, P₂, P₃, P₄) des besagten Quellknoten (1), wobei ein jeder der besagten Ausgangsports (P₁, P₂, P₃, P₄) mit einer Ressource (OR₁, OR₂, OR₃, OR₄) assoziiert ist, wobei die Daten über die besagte Ressource an einen Zielknoten (N₁, N₂, N₃) übertragen werden, wobei ein jeder der besagten Knoten Daten von allen oder von einem Teil der besagten Vielzahl von Ressourcen (OR₁, OR₂, OR₃, OR₄) empfängt, wobei die besagte Ablauffolgesteuerungsvorrichtung (2) **dadurch gekennzeichnet ist, dass** sie eine Vielzahl von Servern (S₁, S₂, S₃, S₄) umfaßt, wobei ein jeder der Server jeweils mit einer Ressource der besagten Vielzahl von Resourcen (OR₁, OR₂, OR₃, OR₄) assoziiert ist und ein jeder der besagten Server Ablauffolgesteuerungsmittel umfasst, wobei die besagten Ablauffolgesteuerungsmittel für einen jeden der besagten Server unabhängig sind.

2. Ablauffolgesteuerungsvorrichtung (2) nach Anspruch 1, **dadurch gekennzeichnet, dass** die besagten Ablauffolgesteuerungsmittel eine Vielzahl von Stufen (L₁, L₂, L₃) umfassen, welcht jeweils einer Vielzahl von Ablauffolgen gemäß unterschiedlichen Kriterien entsprechen.

3. Ablauffolgesteuerungsvorrichtung (2) nach Anspruch 1, **dadurch gekennzeichnet, dass** die besagten Ablauffolgesteuerungsmittel Mittel für die zyklische Ablauffolgesteuerung vom Typ Round Robin umfassen.

4. Ablauffolgesteuerungsvorrichtung (2) nach Anspruch 1, **dadurch gekennzeichnet, dass** die besagten Ablauffolgesteuerungsmittel WFQ-Ablauffolgesteuerungsmittel umfassen.

5. Ablauffolgesteuerungsvorrichtung (2) nach Anspruch 1, **dadurch gekennzeichnet, dass** die besagten Ablauffolgesteuerungsmittel von einem Satz von statischen und/oder dynamischen Gewichtungen abhängig sind.

6. Ablauffolgesteuerungsvorrichtung (2) nach Anspruch 1, **dadurch gekennzeichnet, dass** die besagten Ablauffolgesteuerungsmittel von einem ersten Satz von Gewichtungen abhängig sind, wobei eine jede der besagten Gewichtungen den Zuordnungsprozentsatz der besagten Ressource an einen jeden der besagten Knoten der besagten Mehrzahl von Knoten ausdrückt.

7. Ablauffolgesteuerungsvorrichtung (2) nach Anspruch 5, **dadurch gekennzeichnet, dass** die besagten Ablauffolgesteuerungsmittel von einem zweiten Satz von Gewichtungen abhängig sind, wobei eine jede der besagten Gewichtungen das relative Gewicht des Verkehrs eines jeden der besagten Knoten im Verhältnis zum Gesamtverkehr der Vielzahl der besagten Knoten ausdrückt.

8. Knoten mit einer Ablauffolgesteuerungsvorrichtung gemäß Anspruch 1, umfassend eine Vielzahl von Warteschlangen (B₁, B₂, B₃) für die Übertragung von Daten an eine Vielzahl von Zielknoten (N1, N2, N3), und eine Vielzahl von Ausgangsports (P₁, P₂, P₃, P₄).

9. Datenübertragungssystem (10) mit mindestens einem Quellknoten (1) gemäß einem der vorstehenden Ansprüche.
